(19) **Europäisches Patentamt**
**European Patent Office**
**Office européen des brevets**

(11) **EP 3 159 658 A1**

(12) **EUROPEAN PATENT APPLICATION**
published in accordance with Art. 153(4) EPC

(43) Date of publication:
**26.04.2017 Bulletin 2017/17**

(51) Int Cl.:
***G01C 21/08*** (2006.01)

(21) Application number: **15809774.1**

(86) International application number:
**PCT/CN2015/081429**

(22) Date of filing: **15.06.2015**

(87) International publication number:
**WO 2015/192745 (23.12.2015 Gazette 2015/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **19.06.2014 CN 201410277471**

(71) Applicants:
- **Chigoo Interactive Technology Co., Ltd.**
  **Wuxi, Jiangsu 214028 (CN)**
- **Chigoo Interactive Technology Co., Ltd.**
  **Xinwu District**
  **Wuxi**
  **Jiangsu 214028 (CN)**

(72) Inventors:
- **WANG, Xinheng**
  **Wuxi,**
  **Jiangsu 214028 (CN)**
- **ZHANG, Congcong**
  **Wuxi,**
  **Jiangsu 214028 (CN)**
- **JIA, Shangjie**
  **Wuxi,**
  **Jiangsu 214028 (CN)**

(74) Representative: **Hautier IP**
**1, Rue du Gabian**
**Le Thalès - 12 Etg - Bloc A**
**98000 Monaco (MC)**

(54) **METHOD AND DEVICE FOR REAL-TIME TARGET LOCATION AND MAP CREATION**

(57) Disclosed is a method for real-time object locating and mapping, including: 1) performing real-time locating for a moving object in the range of movement; 2) updating a geomagnetic field map in the range of movement of the object in real time according to the locating of the moving object; 3) locating the next position of the moving object according to the updated geomagnetic field map; and repeating steps 2) and 3) until the object stops moving. A device for real-time object locating and mapping is also disclosed. The present application can solve the problem of real-time object locating and accurate geomagnetic field mapping without an indoor priori magnetic field map.

Fig. 1

**Description**

**TECHNICAL FIELD**

The present invention relates to the field of indoor locating and mapping, and more particularly, to a method and device for combining indoor object locating with mapping.

**BACKGROUND**

The problem to be solved by simultaneous locating and mapping is that, an object needs to determine its own position while using sensor data containing noise to construct the distribution of the items in the environment. Moreover, solution to the problem of locating and mapping can enable the object to achieve true autonomous navigation. In the past ten years, the problem of simultaneous locating and mapping has become a hotspot in the field of mobile robots. Conventionally, EKF (Extended Kalman Filter) is used to simultaneously estimate the positions of a robot and landmarks. However, when the positions of the landmark increase and the movement range of the robot becomes larger, the calculation amount of this method becomes larger and the timeliness gets worse. In addition, this method requires a prior arrangement of the environment, for example, waypoints needs to be arranged, thus consuming human and material resources.

**SUMMARY**

In view of the above defects of the prior art, the present invention provides a method for object locating and mapping. The method uses a motion model through measuring the current geomagnetic field to correct the current position, updates the data of a local map by using a spatial interpolation algorithm, and merges same into a global map, which can achieve the synchronization of object locating and mapping, while greatly reduces the calculation amount and eliminates the need to deploy the environment in advance, thereby saving resources.

According to one aspect of the present invention, a method for object locating and mapping is provided. The method may include: 1) performing real-time locating for a moving object in the range of movement; 2) updating a geomagnetic field map in the range of movement of the object in real time according to the locating of the moving object; 3) locating the next position of the moving object according to the updated geomagnetic field map; and repeating steps 2) and 3) until the object stops moving.

In the above methods, step 1) may include: initializing a position of the object in the range of movement and a global geomagnetic map in the range of movement, the object being provided with a sensor configured to measure a traveling distance, a rotation angle value and a magnetic field value of the object; adding a geomagnetic field value at an initial position of the object to the initialized global geomagnetic map by means of spatial interpolation; measuring traveling control variables of the object and a geomagnetic field value at the current position of the object; and estimating a position of the randomly moving object by using a particle filter algorithm.

The step of initializing a position of the object in the range of movement and a global geomagnetic map in the range of movement may include: abstracting an indoor movement area of the object to grid coordinates, the size of the grid coordinates being set in proportion to the actual size of an activity room. The initial position of the object in the activity room is determined by an internal sensor of the object.

The measured geomagnetic field value is added to the initialized map by means of spatial interpolation such as Kriging interpolation. Measured values around the object are weighted to get a prediction of a position which is not measured by the formula $\hat{Z}(S_0) = \sum_{i=1}^{N} \lambda_i Z(S_i)$, where $\lambda_i$ is an unknown weight of a measured value at the ith position, $S_0$ is a predicated position, N is the number of the measured values, where the weight $\lambda_i$ depends on a fitting model of the spatial relationship among a measurement point, a distance of the predicated position and the measured values around the predicated position when the spatial interpolation is Kriging interpolation.

The step of adding the geomagnetic field value to a map using an interpolation algorithm may include: extracting grid points data in a first predetermined range around the position of the object in the geomagnetic grid map after the position of the object is estimated, then merging the grid points obtained by means of interpolation in the first predetermined range into a grid map in a second predetermined range.

According to another aspect of the present invention, a device for object locating and map updating is provided which may include: a locating module and a map updating module. The locating module is configured to perform real-time locating for a moving object in a range of the object's movement. The map updating module is configured to update a geomagnetic field map in the range of movement of the object in real time according to the locating of the moving object. The locating module is further configured to locate the next position of the moving object according to the updated geomagnetic field map until the object stops moving.

The locating module may include: an initialization module configured to initialize an initial position of the object and a geomagnetic grid map; and a position estimation module configured to estimate the initial position of the object and positions during the movement of the object by using a particle filter algorithm and a kinematic model. The map updating module may include: an interpolation module configured to perform interpolation for the geomagnetic field value in the range of movement of the object by means of spatial interpolation and merge a local map into a global map.

The position estimation module can be implemented on the basis of a particle filter algorithm which may include: a particle filter algorithm module configured to correct the estimated position of the object; and a motion model module configured to analyze the moving in the range of movement of the object by means of a predefined mathematical model.

During the determination of the weight, grid maps which correspond to the direction and intensity of the magnetic field represented by vectors $\langle H_x, H_y, H_z \rangle$ can be used to compose a database, in which each vector denotes a distribution of corresponding vector. Thus, characteristics of the map may be increased, which is useful for locating.

The mapping module may include: an interpolation module configured to extract grid points data in a predetermined range around the position of the object in the geomagnetic grid map after the position of the object is estimated, and interpolate the same with the measured geomagnetic field value; and a merging module configured to merge the grid points obtained by means of interpolation in the predetermined range into a grid map in the predetermined range.

Compared with the prior art, the above-mentioned solution uses real-time object locating to update a magnetic field map based on the result of real-time locating and further to locate an object by means of the updated magnetic field map, which takes a combination of locating and map updating to locate the object accurately and rapidly and to build a consistent map.

Further, after the inventors of the present invention have made intensive and extensive researches, they choose to use the particle filter algorithm with errors produced by correction to update indoor geomagnetic field maps in the face of numerous algorithms, and use the Kriging interpolation algorithm that is the best interpolation method of spatial covariance. So the result has high reliability. The combination of these two methods can locate a robot more accurately and rapidly and build a consistent map.

Now, in most buildings, there are always indoor magnetic field fluctuations because of the existence of objects such as reinforced concrete structures and furniture. But the present invention just uses indoor magnetic field fluctuations to realize the localization and further to realize real-time locating and mapping. Therefore, the implementation of the present invention does not require the additional arrangement of reference points which are required for locating, thus the cost can be reduced.

**BRIEF DESCRIPTION OF THE DRAWINGS**

Fig. 1 is a flowchart showing the steps of a method for object locating according to an embodiment of the present invention;

Fig. 2 is a schematic diagram of initializing an initial position of an object in the range of movement according to an embodiment of the present invention;

Fig. 3 is a schematic diagram of an initial geomagnetic field grid map in the range of movement according to an embodiment of the present invention;

Fig. 4 is a schematic diagram of adding a geomagnetic field value at an initial position of an object to an initial map by using a Kriging interpolation algorithm according to an embodiment of the present invention;

Fig. 5 is a schematic diagram of correcting the position of a moving object according to an embodiment of the present invention;

Fig. 6 is a schematic diagram of measuring a geomagnetic field value at the current position of an object according to an embodiment of the present invention;

Fig. 7 is a schematic diagram of adding a geomagnetic field value to a local map by using an interpolation algorithm according to an embodiment of the present invention;

Fig. 8 is a schematic diagram of merging a local map into a global map; and

Fig. 9 is structural schematic diagram of a device for real-time object locating and mapping in a geomagnetic field according to an embodiment of the present invention.

## DETAILED DESCRIPTION

The present invention will be described in further details in conjunction with the drawings.

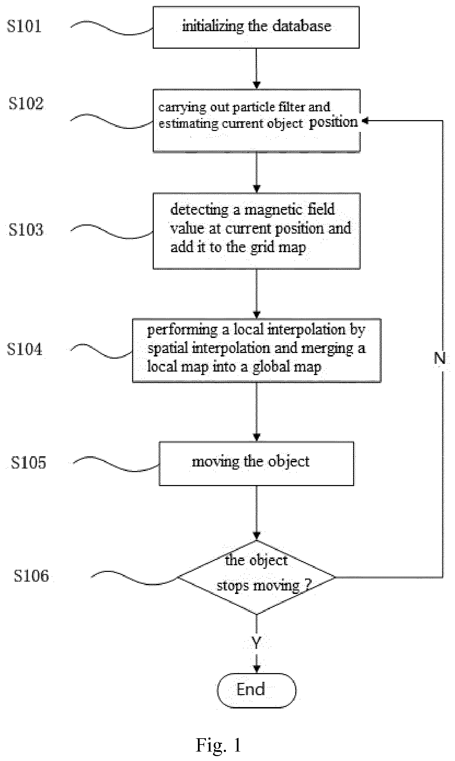

Fig. 1 is a flowchart of the steps of a method for real-time object locating and mapping in a geomagnetic field according to an embodiment of the present invention. In an embodiment, the method may include the following steps, as shown in Fig. 1.

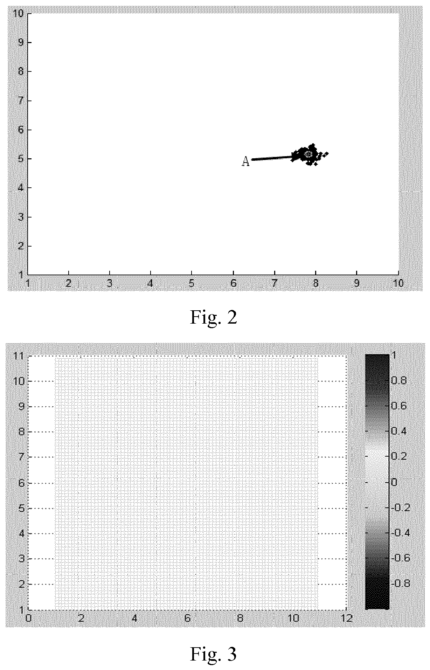

Step S101: An activity area (in this embodiment, taking an activity room as an example) of an object to be located is conducted a field measurement to obtain an indoor plan. Then the plan is simulated as an initialization grid map. Combined with the data $(l_i, \theta_i)$ from an internal sensor of the object, where $l_i$ is a distance of the ith movement, $\theta_i$ is a deflection angle of the ith movement, the position of the object to be located in the simulated initialization grid map can be determined. Fig. 2 is a schematic diagram of initializing an initial position of an object in the range of movement according to an embodiment of the present invention. As shown in Fig. 2, "A" refers to the initial position of the object, the black spots next to it are sampling points for position workspace in an Importance Sampling Algorithm of a particle filtering algorithm. A mean value of these sampling points denotes a position estimate of the object.

Step S102: If the object locates at the initial position, the particles are evenly distributed around A. The position of A is measured by the object's internal sensor. With the movement of the object, based on a motion model, i.e., $x_k = f(x_{k-1}, v_{k-1}, w_k)$, $x_k$ can be calculated by means of $x_{k-1}$ and a control input variable $v_{k-1}$, where $x_k$ is the state at time k, $v_{k-1}$ is a control input variable at time k-1 (i.e., the traveling distance of the object and a rotation angle), $w_k$ is a correlated error from time k-1 to time k. Since both the sensor itself and the surrounding environment will cause certain errors in the measurement, it is difficult for a robot to realize accurate locating based on such inaccurate control information. The errors in the present invention are a cumulative sum of random noise and white Gaussian noise. The motion model used in the present invention is:

$$
\begin{cases}
<x_t, y_t> = MOVE + <x_{t-1}, y_{t-1}> + \sqrt{0.5} * randn(1,2) + 0.01 * wgn(1,2,0.05) \\
MOVE = [-l_t * \sin(\theta_t), l_t * \cos(\theta_t)], 0 \le \theta_t < 90 \\
MOVE = [-l_t * \cos(\theta_t - 90), -l_t * \sin(\theta_t - 90)], 90 \le \theta_t < 180 \\
MOVE = [l * \cos(270 - \theta_t), -l_t * \sin(270 - \theta_t)], 180 \le \theta_t < 270 \\
MOVE = [l_t * \cos(360 - \theta_t), l_t * \sin(360 - \theta_t)], 270 \le \theta_t < 360
\end{cases}
$$

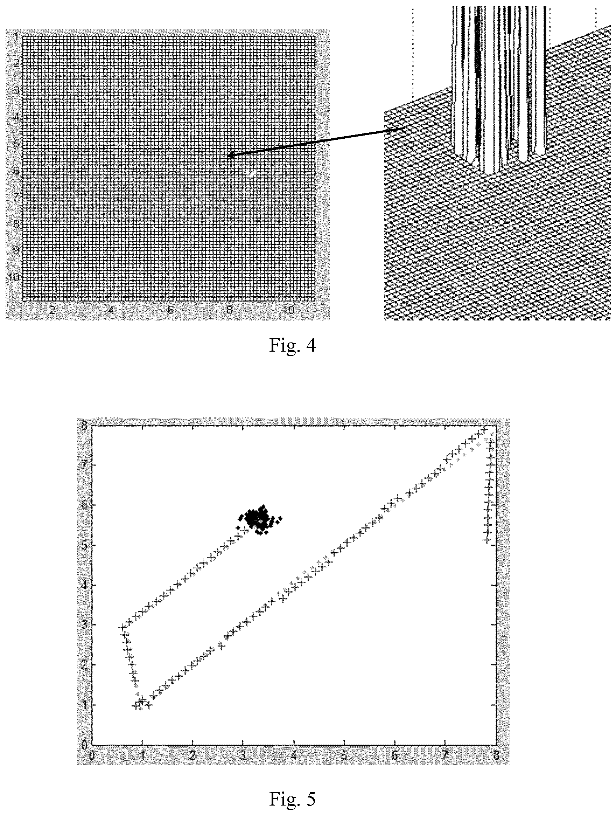

where $l_t$ is a movement distance of the object from time t-1 to time t; $\theta_t$ is a rotation angle of the object from time t-1 to time t, which is based on due north direction and rotates anti-clockwise; randn(1,2) generates random numbers having $1 \times 2$ vectors, and wgn(1, 2, 0.05) generates white Gaussian noise with 0.05dBw having $1 \times 2$ vectors. All the particles that are set will move with the motion model (as shown in Fig. 5) to obtain the sampling values at the particles' new position. The movement of the sampling points in the indoor plan is shown in Fig. 5. Then the current position of the object is estimated based on the magnetic field values detected by an external sensor carried by the object. Although the position of the object can be roughly estimated by controlling the input parameters, there are deviations which will accumulate. Therefore, in an embodiment, the position of the object is further corrected such that the measured position is consistent with the actual position, and the accumulation of the deviations is eliminated to the great extent.

The specific implementation of the particle filter algorithm is:

Setting an initial particle distribution: an initial distribution of particles is a uniform distribution around the starting position of an object (robot), which produces Num = 100 particles $X_0^{(i)}$, the weight of the particles is $\omega_0^{(i)}$. Based on such an assumption, it is sufficient to have only 100 particles. Since a major drawback in the particle filter algorithm is that the calculation amount is large and the timeliness is poor, the quantity of particles is a key factor to determine the calculation amount. In this embodiment, the calculation amount can be decreased and the implementation can be ensured through reducing the quantity of particles while the precision is guaranteed. So the convergence of particle filtering will be very fast to achieve real-time operation;

Importance resampling: the state of each particle is updated from $X_{t-1}^{(i)}$ to $X_t^{(i)}$, then new locations of the 100 particles can be obtained based on conditional probability distribution $P(X_t^{(i)} | X_{t-1}^{(i)}, U_t)$, where $X_{t-1}^{(i)}$ is the state of the ith particle at time t-1, $U_t$ is a control input variable at time t. Particles are obtained by means of sampling in a position space where the object is located. The distribution of these particles is a representation of the probability distribution of the spatial position of the object.

Weights calculation: the theoretical formula for calculating the weight is $\omega_t^{(i)} = \dfrac{p(X_t^{(i)} \mid z_{1:t}, u_{0:t})}{q\left(X_t^{(i)} \mid z_{1:t}, u_{0:t}\right)}$ , where

$p(X_t^{(i)} \mid z_{1:t}, u_{0:t})$ is a true distribution, while $q(X_t^{(i)} \mid z_{1:t}, u_{0:t})$ is a suggestive distribution. Since the direction and intensity of the magnetic field are represented by vectors $\langle H_x, H_y, H_z \rangle$, the database used in this embodiment is composed of three grid maps of the same size, each map denotes a distribution of $H_x, H_y, H_z$, respectively. In this way, the number of characteristics of the map will increase, which is conducive to locating. The calculation of the weights is based on an exponential distribution. The computational complexity of exponential distribution (usually expressed in terms of time complexity) is $O(N)$, while the computational complexity of Gaussian distribution is $O(N^2)$, where N denotes the quantity of particles. Thus it can be seen that the method of calculating weights based on exponential distribution in this embodiment can reduce the amount of computations, speed up the convergence speed and improve the locating accuracy. The exponential distribution function is:

$$\begin{cases} Dis = \sqrt{\mid R.magx - mapx \mid + \mid R.magy - mapy \mid + \mid R.magz - mapz \mid} \\ R.w = R.w * \lambda * \exp((-Dis)/\lambda) \end{cases}$$

Where $R.magx$ is the value of the magnetic field measured in $H_x$ direction at the current position point of the object, $mapx$ is the value of the current position on the grid map, and $R.w$ is the weight of a particle. The magnetic field value on the grid map may be derived from the interpolation algorithm, or it may be directly added when the object passed by before. So are $R.magy$, $mapy$, $R.magz$, $mapz$. The value of $\lambda$ can be reasonably adjusted according to the data obtained by experiment. The value of $\lambda$ is 2 in this embodiment.

Weight normalization: $\omega_k^{(i)} = \omega_k^i / \sum\limits_{i=1}^{N_{um}} \omega_k^{(i)}$ ;

The number of effective particles (e.g. the number of effective particles are determined by weight) $N_{\text{eff}} = 1 / \sum\limits_{i-1}^{N} \left(\omega_k^i\right)^2$ is calculated. A threshold value $\delta$ is set based on an empirical value, such as according to the proportion of the number of particles. For example, the value of $\delta$ can be set 75% of the total number of particles. If the number of effective particles is smaller than this threshold, the particles $X_k$ are resampled based on the value of particle weight $\omega_k^{(i)}$. The particles with small weights are removed, and the particles with large weights are copied by the number of removed particles with small weights so as to keep the total number of the particles unchanged.

Object position estimation: based on the particles sampled in the last step, the mean value of the spatial distribution of the particles is determined. Specifically, the weight of the particle is multiplied by the position coordinates, and then the product is superimposed to estimate the current position of the object.

Step S103: On the simulated indoor grid map (as shown in Fig. 3) obtained in step S101, the values measured by the external sensor of the object are interpolated to the simulated grid map using the Kriging interpolation algorithm, the result of interpolation is shown in Fig. 4. Fig. 4 is a schematic diagram of adding a geomagnetic field value at an initial position of an object to an initialization map by using the Kriging interpolation algorithm according to an embodiment of the present invention. Here, the right-side part of the figure is a partial enlargement of the left-side interpolation part.

In a simulation experiment, the geomagnetic field database of the present invention is obtained by measuring a group of true magnetic field values in a range of activity room with 10m × 10m at intervals of 0.5m, altogether 21x21 groups are measured. Then a spatial interpolation operation is performed on these 441 groups of data to get 81x81 groups of data. Owing to the stability of the indoor magnetic field fluctuations, these 81 x81 groups of data are used as the geomagnetic field database in this embodiment to measure actual values in simulation.

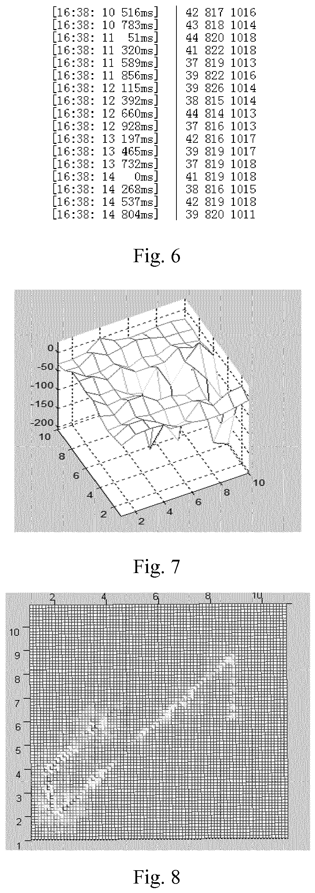

Step S104: The geomagnetic field values obtained in step S103 are firstly inserted into a local geomagnetic field. The local geomagnetic field is extracted from a global geomagnetic field. The extraction rule is as follows: 10×10 grid data centered on an estimate point are extracted from a grid map at the estimated position point to implement an interpolation operation; if a 10×10 local grid cannot be obtained when the estimated position point is regarded as the center, then the extraction is performed from a 10×10 grid corners map including the estimated position point. For example, if the coordinates (x, y) of the estimated position point satisfy a condition (abs (y-1) <5 && abs (x-1) <5), then

EP 3 159 658 A1

an extraction is carried out on an area with abscissa values from 1 to 10, ordinate values from 1 to 10 in the global map. The process of merging the interpolated local map (as shown in Fig. 7) into the global map is an inverse of extraction (as shown in Fig. 8). In this way, the correlation between the magnetic field data and the magnetic field values around the estimated position point can be taken into account, and the computation of interpolation can be reduced.

Step S105: The object is moved randomly in the activity range. The relevant data obtained by an internal sensor of the object is collected so as to provide a basis for updating the particles in the next step.

Step S106: Whether the movement of the object is stopped or not is detected. If not, the operation returns to step S102, and the operation (iteration) is repeated until the movement of the object is stopped.

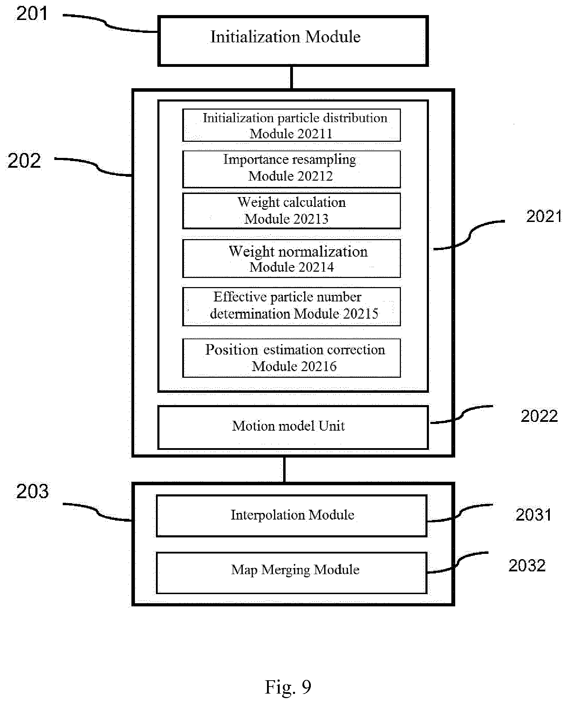

A device for real-time object locating and mapping is provided according to an embodiment of the present invention. As shown in Fig. 9, the device may include:

an initialization module 201 configured to initialize an initial position of an object and a geomagnetic field grid map;

a position estimation module 202 configured to estimate the initial position and the position during the movement of the object using a particle filter algorithm and a kinematic model; and

a map updating module 203 configured to interpolate the geomagnetic field values measured by a sensor using a spatial interpolation algorithm and merge a local map into a global map.

The position estimation module 202 may include:

a particle filter algorithm module 2021, including:

an initialization particles distribution module 20211 configured to provide an original reference for the movement of subsequent particle sets;

an importance resampling module 20212 configured to generate a set of particle estimates based on an object movement process;

a weight calculation module 20213 configured to assign a related weight to the particle, the closer to the characteristic of the object, the larger the weight, and vice versa;

a weight normalization module 20214 configured to normalize the weights of the particles;

an effective particle number determination module 20215 configured to find the number of particles that are close to the characteristic of the object; and

a position estimation correction module 20216 configured to correct the movement position estimation of the object.

Through the operation of the above modules, the initial particle distribution, the importance re-sampling, the weight calculation, the weight normalization and the calculation of the effective particle number are carried out by using the particle filtering method as described above to estimate the current position of the object (robot).

The position estimation module 202 may further include a motion model unit 2022 configured to analyze the movement of the object in the range of movement through a predetermined mathematical model. A nonlinear dynamic model i.e., $\begin{cases} x_t = f(x_{t-1}, v_{t-1}) \\ y_t = h(x_t, n_t) \end{cases}$, is used in this embodiment.

This model can make a prediction for the observed values using prior information. Posterior information can be obtained using this formula after the observed values are predicted so as to correct the prior information. The corrected information is again used as prior information for prediction. So the cycle continues, the observed values are continuously obtained to correct the prior information (previous position) of the object' position. In the present invention, formula $x_t = f(x_{t-1}, v_{t-1})$ is the same as the motion model in step 102. However, formula $y_t = h(x_t, n_t)$ is used to correct position information in a map of the particles based on interpolation.

The map updating module 203 may include:

an interpolation module 2031 configured to derive a prediction of an unmeasured position, such as by weighting the surrounding measured values with a Kriging method. The prediction may be derived from a weighted sum of data

6

using the following formula: $\hat{Z}(S_0) = \sum_{i=1}^{N} \lambda_i Z(S_i),\quad \sum_{i=1}^{N} \lambda_i = 1$ , where $\lambda_i$ is a position weight of a measured value at the ith position, $S_0$ is a predicted position, $S_i$ is a random point around the predicted position, $Z(S_i)$ is a magnetic field value at the position $S_i$, N is the quantity of the measured values which is 100 in this embodiment.

In this embodiment, the data point is represented with coordinates point $S_i(a_i,b_i)$i=1,2, ...,n, the coordinates of the point to be interpolated are represented with $S_0(a_0,b_0)$, then a distance $h_{ij} = \sqrt{(a_i - a_j)^2 + (b_i - b_j)^2}$ between scattered points is calculated, where i=1,2,...,n; and j=1,2,...,n. The distance values are divided into several groups after sorting the distance by the values in an ascending order. Each group includes a certain number of distance values. These distance values can be combined into a distance group (which is represented by $\{h'_m\}$):

$$\{h'_m\} = m \times \frac{(\max h_{ij} - \min h_{ij})}{N_H}$$ , $m$ = 1,2,..., $N_H$, where $N_H$ is the number of distance groups, a distribution

shape $\gamma^*(h'_m) = \frac{1}{2N(h'_m)} \sum_{i=1}^{N(h'_m)} [Z(S_i) - Z(S_i - h'_m)]^2$ ($i$ = 1,...,$N(h)$) can be calculated by $\{h'_m\}$. $h'_m$ is abscissa, and $\gamma^*(h'_m)$ is ordinate. It is needed to choose a suitable model to fit so as to produce a continuous curve that represents the distribution of $\gamma^*(h'_m)$. The semevariation fitting model is circular in this embodiment:

$$\gamma(h) = \begin{cases} c_0 + c(1 - \frac{2}{\pi}\cos^{-1}(\frac{h}{\alpha}) + \sqrt{(1 - \frac{h^2}{\alpha^2})}) & 0 < h < \alpha \\ c_0 + c & h > \alpha \\ 0 & others \end{cases}$$

Where $c_0$ is nugget value, $c$ is sill value and $\alpha$ is range. The model parameters (such as $c_0$, $c$, $\alpha$, etc.) can be calculated through fitting the distribution of function $\gamma^*(h'_m)$ (it is a discrete distribution) to get a distribution (i.e., variation function $\gamma^*(h)$) that is fit for the samples in this experiment. Then the following equations are used, that is,

$$\begin{cases} \sum_{i=1}^{N} \gamma^*(S_i - S_j)\lambda_i - \mu = \gamma^*(S_0 - S_j) & (j = 1,\dots,N) \\ \sum_{i=1}^{N} \lambda_i = 1 \end{cases},$$

where $\mu$ is Lagrange multiplier. Weight $\lambda_i$ and Lagrange multiplier $\mu$ are determined by solving the above equations.

Finally, a predicted value $\hat{Z}(S_0)$ at position $S_0(a_0,b_0)$ is determined by means of formula $\hat{Z}(S_0) = \sum_{i=1}^{N} \lambda_i Z(S_i)$.

The map updating module 203 may further include a map merging module 2032 which may be configured to extract a local geomagnetic field from a global geomagnetic field. The extraction rule is, for example, 10×10 local grid data centered on an estimated position point are extracted from a global grid map (81×81) at the estimated position point to implement interpolation; if the estimated position point is in the peripheral position of the grid map, then the extraction is performed from a 10×10 grid corners map including the estimated position point. Since the local map (as shown in Fig. 7) after interpolation and the extracted map before interpolation are of the same size, the process of merging into the global map (as shown in Fig. 8) is as follows: the local map extracted from the global map covers ( or is inserted into) the location of extraction. It is essentially to create a small map with the same size as the local map (that is, the size of the grid is the same as the data on grid distribution) through the above-mentioned method. The size of the small map after interpolation remains unchanged, whilst the data on the grid distribution has changed. The small map after interpolation gradually covers the global map. Thus, a large amount of computation caused by global map interpolation can be avoided.

**Claims**

1. A method for real-time object locating and mapping, comprising:

    1) performing real-time locating for a moving object in the range of movement;
    2) updating a geomagnetic field map in the range of movement of the object in real time according to the locating of the moving object;
    3) locating the next position of the moving object according to the updated geomagnetic field map; and

    repeating steps 2) and 3) until the object stops moving.

2. The method of claim 1, wherein the act of performing real-time locating for a moving object in the range of movement comprises:

    initializing a position of the object in the range of movement and a global geomagnetic map in the range of movement, the object being provided with a sensor configured to measure a traveling distance, a rotation angle value and a magnetic field value of the object;
    adding a geomagnetic field value at an initial position of the object to the initialized global geomagnetic map by means of spatial interpolation;
    measuring traveling control variables of the object and a geomagnetic field value at the current position of the object; and
    estimating a position of the randomly moving object by using a particle filter algorithm.

3. The method of claim 2, wherein the act of updating a geomagnetic field map in the range of movement of the object in real time according to the locating of the moving object comprises:

    after the position of the object is estimated, extracting grid points data in a predetermined range around the position of the object in the geomagnetic grid map, conducting an interpolation with the measured geomagnetic field value, and then merging the obtained grid points in the predetermined range into a grid map in the predetermined range.

4. The method of claim 1, wherein the act of initializing a position of the object in the range of movement and a global geomagnetic map in the range of movement comprises:

    abstracting an indoor movement area of the object to grid coordinates, the size of the grid coordinates being set in proportion to the actual size of a movement room.

5. The method of any of claims 1 to 4, wherein a geomagnetic field value at an initial position of the object is inserted to the initialized global geomagnetic map by means of Kriging interpolation which comprises:

    weighting the a measured value around the object as follows to get an estimated predicted value
    $\hat{Z}(S_0) = \sum_{i=1}^{N} \lambda_i Z(S_i)$ at a position which is not measured, where $\lambda_i$ is an unknown weight of a measured value
    at the ith position, $S_0$ is a predicted position, N is the number of the measured values, the weight $\lambda_i$ depending on a fitting model of the spatial relationship among a measurement point, a distance of the predicted position and the measured values around the predicted position.

6. The method of claim 5, wherein the fitting model is circular, and the variation function expression thereof is as follows:

$$\gamma(h) = \begin{cases} c_0 + c(1 - \frac{2}{\pi}\cos^{-1}(\frac{h}{\alpha}) + \sqrt{(1 - \frac{h^2}{\alpha^2})}) & 0 < h < \alpha \\ c_0 + c & h > \alpha \\ 0 & others \end{cases}$$

wherein $C_0$ is nugget value, C is sill value and $\alpha$ is a range of variation.

**7.** The method of claim 2, wherein the act of estimating a position of the randomly moving object by using a particle filter algorithm comprises:

measuring a movement distance and an offset angle of the object from a previous time to the current time; and estimating the position of the object from a mean of the positions of particles based on a nonlinear dynamic

model $\begin{cases} x_k = f(x_{k-1}, v_{k-1}, w_k) \\ S_k = h(x_k, n_k) \end{cases}$, assuming that the particles are uniformly distributed initially, the particles move in the same motion model as the object with the moving of the object.

**8.** The method of claim 7, wherein the motion model is:

$$\begin{cases} <x_t, y_t> = MOVE + <x_{t-1}, y_{t-1}> + \sqrt{0.5} * randn(1,2) + 0.01 * wgn(1,2,0.05) \\ MOVE = [-l_t * \sin(\theta_t), l_t * \cos(\theta_t)], 0 \le \theta_t < 90 \\ MOVE = [-l_t * \cos(\theta_t - 90), -l_t * \sin(\theta_t - 90)], 90 \le \theta_t < 180 \\ MOVE = [l * \cos(270 - \theta_t), -l_t * \sin(270 - \theta_t)], 180 \le \theta_t < 270 \\ MOVE = [l_t * \cos(360 - \theta_t), l_t * \sin(360 - \theta_t)], 270 \le \theta_t < 360 \end{cases}$$

where $l_t$ is a movement distance of the object from time t-1 to time t;
$\theta_t$ is a rotation angle of the object from time t-1 to time t on the basis of due north direction by anti-clockwise; randn(1,2) generates random numbers having 1×2 vectors, and wgn(1,2,0.05) generates Gaussian white noise with 0.05dBw having 1×2 vectors.

**9.** A device for real-time object locating and mapping, comprising a locating module and a map updating module, wherein:

the locating module is configured to perform real-time locating for a moving object in the range of movement; the map updating module is configured to update a geomagnetic field map in the range of movement of the object in real time according to the locating of the moving object; and
the locating module is further configured to locate the next position of the moving object according to the updated geomagnetic field map until the object stops moving.

**10.** The device of claim 9, wherein
the locating module comprises:

an initialization module configured to initialize an initial position of the object and a global geomagnetic grid map; and
a position estimation module configured to estimate the initial position of the object and positions during the movement of the object by using a particle filter algorithm and a kinematic model; and
the map updating module comprises:

an interpolation module configured to interpolate a geomagnetic field value in the range of movement of the object by means of spatial interpolation; and
a map merging module configured to merge a local map into a global map.

**11.** The device of claim 10, wherein the position estimation module comprises:

a particle filter algorithm module configured to correct the estimated position of the object; and
a motion model unit configured to analyze the moving in the range of movement of the object by means of a predefined mathematical model.

**12.** The device of claim 11, wherein the particle filter algorithm module comprises:

an initialization particle distribution module configured to provide an original reference for the movement of subsequent particle sets;

an importance resampling module configured to generate a set of particle estimates based on an object movement process;

a weight calculation module configured to assign a related weight to the particle, the closer to the characteristic of the object, the larger the weight, and vice versa;

a weight normalization module configured to normalize the weights of the particles;

an effective particle number determination module configured to find the number of particles that are close to the characteristic of the object; and

a position estimation correction module configured to correct the movement position estimation of the object.

13. The device of claim 12, wherein a database used in the weight calculation module is the data of three gird maps represented by vectors $\langle H_x, H_y, H_z \rangle$ based on the direction and intensity of the magnetic field, each vector denoting a distribution of $H_x, H_y, H_z$, respectively, the three gird maps having the same grid size.

14. The device of claim 13, wherein the interpolation module is configured to extract grid points data in a predetermined range around the position of the object in the geomagnetic grid map after the position of the object is estimated, and interpolate same with the measured geomagnetic field value, and the device further comprises:

a merging module configured to merge the grid points in the predetermined range obtained through interpolation into a grid map in the predetermined range.

S101 — initializing the database

S102 — carrying out particle filter and estimating current object position

S103 — detecting a magnetic field value at current position and add it to the grid map

S104 — performing a local interpolation by spatial interpolation and merging a local map into a global map

S105 — moving the object

S106 — the object stops moving ?

N

Y

End

Fig. 1

Fig. 2

Fig. 3

Fig. 4

Fig. 5

```
[16:38: 10 516ms]     42 817 1016
[16:38: 10 783ms]     43 818 1014
[16:38: 11  51ms]     44 820 1018
[16:38: 11 320ms]     41 822 1018
[16:38: 11 589ms]     37 819 1013
[16:38: 11 856ms]     39 822 1016
[16:38: 12 115ms]     39 826 1014
[16:38: 12 392ms]     38 815 1014
[16:38: 12 660ms]     44 814 1013
[16:38: 12 928ms]     37 816 1013
[16:38: 13 197ms]     42 816 1017
[16:38: 13 465ms]     39 819 1017
[16:38: 13 732ms]     37 819 1018
[16:38: 14   0ms]     41 819 1018
[16:38: 14 268ms]     38 816 1015
[16:38: 14 537ms]     42 819 1018
[16:38: 14 804ms]     39 820 1011
```

Fig. 6

Fig. 7

Fig. 8

201 — Initialization Module

202 —

┌─────────────────────────────────────────┐
│ 2021                                     │
│  Initialization particle distribution    │
│  Module 20211                            │
│                                          │
│  Importance resampling                   │
│  Module 20212                            │
│                                          │
│  Weight calculation                      │
│  Module 20213                            │
│                                          │
│  Weight normalization                    │
│  Module 20214                            │
│                                          │
│  Effective particle number               │
│  determination Module 20215              │
│                                          │
│  Position estimation correction          │
│  Module 20216                            │
│                                          │
│  Motion model Unit          2022         │
└─────────────────────────────────────────┘

203 —
┌─────────────────────────────────────────┐
│  Interpolation Module       2031         │
│                                          │
│  Map Merging Module         2032         │
└─────────────────────────────────────────┘

Fig. 9

# INTERNATIONAL SEARCH REPORT

| | International application No. |
|---|---|
| | PCT/CN2015/081429 |

**A.  CLASSIFICATION OF SUBJECT MATTER**

G01C 21/08 (2006.01) i

According to International Patent Classification (IPC) or to both national classification and IPC

**B.  FIELDS SEARCHED**

Minimum documentation searched (classification system followed by classification symbols)

G01C 21; G05D 1

Documentation searched other than minimum documentation to the extent that such documents are included in the fields searched

Electronic data base consulted during the international search (name of data base and, where practicable, search terms used)

CPRSABS, CNABS, CNKI, CNTXT, VEN: simula+, locat+, localizat+, position+, map+, synchron+, geomagnet+, SLAM

**C.  DOCUMENTS CONSIDERED TO BE RELEVANT**

| Category* | Citation of document, with indication, where appropriate, of the relevant passages | Relevant to claim No. |
|---|---|---|
| PX | CN 104019813 A (WUXI CHIGOO NETWORK TECHNOLOGIES CO., LTD.) 03 September 2014 (03.09.2014) description, paragraphs [0004]-[0015], [0027]-[0068], and figures 1-9 | 1-14 |
| X | CN 102445201 A (UNIV NORTHEAST FORESTRY) 09 May 2012 (09.05.2012) description, paragraphs [0037]-[0090] | 1-14 |
| A | CN 101625572 A (UNIV ZHEJIANG) 13 January 2010 (13.01.2010) the whole document | 1-14 |
| A | CN 101920498 A (TEK ELECTRICAL SUZHOU CO., LTD.) 22 December 2010 (22.12.2010) the whole document | 1-14 |
| A | US 2009093907 A1 (MASAKI RYOSO et al.) 09 April 2009 (09.04.2009) the whole document | 1-14 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 September 2015 | 25 September 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>YANG, Shilin<br><br>Telephone No. (86-10) 62085717 |

Form PCT/ISA/210 (second sheet) (July 2009)

**INTERNATIONAL SEARCH REPORT**

| International application No. |
| --- |
| PCT/CN2015/081429 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | CN 101000507 A (UNIV. ZHEJIANG) 18 July 2007 (18.07.2007) the whole document | 1-14 |
| A | TIAN, Maojun et al., Application of SLAM in Submarine's Geomagnetism Navigation and Positioning Based on EKF, Ship Electronic Engineering, vol. 32, no. 8, 30 August 2012 (30.08.2012), ISSN: 1672-9730, pages 52-54 | 1-14 |
| A | LIU, Ming et al., System Modeling of SLAM-based Geomagnetic Aided Inertial Navigation, Aviation Precision Manufacturing Technology, vol. 47, no. 6, 30 December 2011 (30.12.2011), ISSN: 1003-5451, pages 13-16 | 1-14 |
| A | ZENG, Pinshan et al., Research on Simultaneous Localization and Mapping Methods of Autonomous Mobile Robot, Electronic Sci. & Tech., vol. 26, no. 9, 15 September 2013 (15.09.2013), ISSN:1007-7820, pages 177 and 178 | 1-14 |

Form PCT/ISA /210 (continuation of second sheet) (July 2009)

**INTERNATIONAL SEARCH REPORT**
Information on patent family members

| International application No. |
| --- |
| PCT/CN2015/081429 |

| Patent Documents referred in the Report | Publication Date | Patent Family | Publication Date |
| --- | --- | --- | --- |
| CN 104019813 A | 03 September 2014 | None | |
| CN 102445201 A | 09 May 2012 | CN 102445201 B | 25 December 2013 |
| CN 101625572 A | 13 January 2010 | CN 101625572 B | 11 May 2011 |
| CN 101920498 A | 22 December 2010 | None | |
| US 2009093907 A1 | 09 April 2009 | JP2009093308 A | 30 April 2009 |
| | | JP2012256344 A | 27 December 2012 |
| | | JP5439552 B2 | 12 March 2014 |
| CN 101000507 A | 18 July 2007 | CN 100449444 C | 07 January 2009 |

Form PCT/ISA /210 (patent family annex) (July 2009)